# EUROPÄISCHE PATENTSCHRIFT

(11) **EP 1 984 134 B1**
(45) Veröffentlichungstag und Bekanntmachung des Hinweises auf die Patenterteilung: **08.09.2010**
(21) Anmeldenummer: 07704613.4
(22) Anmeldetag: 16.02.2007
(51) Int. Cl.: B23B 5/32

(54) **MOBILE RADSATZBEARBEITUNGSEINRICHTUNG**
MOBILE DEVICE FOR WORK ON WHEEL SETS
DISPOSITIF MOBILE D'USINAGE DE JEUX DE ROUES

(30) Priorität: 16.02.2006 DE 102006007137
(43) Veröffentlichungstag der Anmeldung: 29.10.2008
(73) Patentinhaber: Hegenscheidt-MFD GmbH & Co. KG, 41812 Erkelenz (DE)
(72) Erfinder: BOMS, Manfred, 41844 Wegberg (DE); REICHE, Hans-Joachim, 40699 Erkrath (DE); NIJSSEN, Theo, NL-5954 Cj Beesel (NL)
(74) Vertreter: Cohausz & Florack
(86) Internationale Anmeldenummer: PCT/EP2007/051490
(87) Internationale Veröffentlichungsnummer: WO 2007/093633

(56) Entgegenhaltungen:
- DE-U1- 20 319 063
- US-A- 3 848 513

## Beschreibung

Die Erfindung betrifft eine auf Rollen gelagerte und auf einem Werkstattgleis verfahrbare mobile Radsatzbearbeitungseinrichtung nach dem Oberbegriff des Anspruchs 1, welche zum Bearbeiten von Radsätzen bestimmt ist, die in einem Drehgestell eines Eisenbahnfahrzeugs drehbar gelagert sind. Die Radsatzbearbeitungseinrichtung umfasst einen zur mobilen Radsatzdrehmaschine zugehörigen Service-Container, welcher über eine Kupplung mit der mobilen Radsatzdrehmaschine verbunden ist, wobei der Service-Container ebenfalls auf Rollen gelagert und auf dem Werkstattgleis verfahrbar ist. Die Erfindung umfasst aber auch eine Einrichtung zum Abstützen von einem oder mehreren Radsätzen eines Drehgestells, welche sich jeweils nicht in der Bearbeitung befinden.

Unter dem Begriff des Bearbeitens von Radsätzen wird sowohl das Reprofilieren der beiden einzelnen Räder als auch das Bearbeiten von Bremsscheiben verstanden, welche auf der Achswelle des Radsatzes oder innerhalb der Radscheiben angeordnet sein können.

Die erfindungsgemäße Maschine ist besonders für das Bearbeiten von Radsätzen vorgesehen, die in einem losen Drehgestell gelagert sind. Unter einem losen Drehgestell versteht man einen Drehgestell, welches zum Zeitpunkt der Bearbeitung der Radsätze nicht mit einem Eisenbahnfahrzeug verbunden ist. Drehgestelle dieser Art fallen häufig an in Werkstätten, in denen sich Eisenbahnwaggons oder Lokomotiven zur Revision befinden oder auch in Werkstätten, in denen ein Spurwechsel am Eisenbahnfahrzeug vorgenommen wird. Das ist zum Beispiel der Fall an der Grenze zwischen Frankreich und Spanien oder an der Grenze zwischen Polen und Russland. Die an solchen Orten anfallenden losen Drehgestelle werden mit Hilfe eines Krans auf die Radsatzdrehmaschine aufgesetzt. Nach der Bearbeitung des einen Radsatzes wird das lose Drehgestell vom Werkstattkran wieder angehoben und gewendet, so dass der andere Radsatz bearbeitet werden kann. Die vorliegende Erfindung beschränkt sich nicht nur auf die Bearbeitung von üblicherweise mit zwei Radsätzen ausgestatteten losen Drehgestellen sondern auch von losen Drehgestellen mit mehr als zwei Radsätzen. Die Erfindung betrifft aber auch eine Radsatzbearbeitungseinrichtung zum Bearbeiten von Radsätzen, die in Drehgestellen drehbar gelagert sind, welche mit einem Eisenbahnfahrzeug, Lokomotive oder Waggon, verbunden sind. In solchen Fällen wird das Eisenbahnfahrzeug mitsamt seinen Drehgestellen angehoben und die Radsatzbearbeitungseinrichtung darunter geschoben, oder die Radsatzbearbeitungseinrichtung wird in eine Grube abgesenkt und das Eisenbahnfahrzeug fährt mit seinen Drehgestellen entlang eines Werkstattgleises über die Radsatzbearbeitungseinrichtung, wo die Räder sodann bearbeitet werden können.

Für die jeweils nicht in Bearbeitung befindlichen Radsätze des Drehgestells sind Abstützungen vorgesehen, die fester Bestandteil eines Service-Containers sind, der zur mobilen Radsatzdrehmaschine dazugehört.

Eine mobile Radsatzdrehmaschine ist beispielsweise aus der DE 100 25 724 A1 bekannt. Bei der bekannten mobilen Radsatzdrehmaschine ist der Rahmen der Maschine auf Rollen oder Rädern gelagert und kann überflur verfahren werden. Die bekannte Radsatzdrehmaschine ist zum Reprofilieren von Radscheiben oder Bremsscheiben eines in Lagergehäusen drehbar gelagerten Eisenbahnrades oder Radsatzes vorgesehen. Sie weist einen ortsbeweglichen Tragrahmen auf mit einem Spannorgan zum Angreifen an einem geschlossenen inneren und/oder äußeren Lagergehäuse eines Radsatzes sowie Stützrollen, die dem Spannorgan gegenüberliegend in gegenseitigem Abstand voneinander am Außenumfang der Radscheibe andrückbar sind, an deren Lagergehäuse das Spannorgan angreift. Schließlich weist die bekannte mobile Radsatzdrehmaschine auch einen Antrieb für wenigstens eine der beiden Stützrollen auf sowie ein Werkzeug zum Bearbeiten von Rad- oder Bremsscheiben des Eisenbahnrades oder Radsatzes.

Im Verlauf der Entwicklung hat sich gezeigt, dass es vorteilhaft ist, der mobilen Radsatzdrehmaschine einen Service-Container zuzuordnen. Ein derartiger Service-Container ist beispielsweise bekannt aus der DE 202 14 918 U1. Hierbei handelt es sich um einen Service-Container, welcher zur mobilen Radsatzbearbeitungsmaschine gehört, ortsbeweglich ist und Verbindungsleitungen für Energie und/oder Steuerungen und/oder das Entsorgen von bei der Bearbeitung anfallenden Abfallsstoffen aufweist, die mit entsprechenden Anschlüssen am Tragrahmen der mobilen Radsatzbearbeitungsmaschine kuppelbar sind. Darüber hinaus kann die Entsorgungseinrichtung des bekannten Service-Containers auch einen Späneförderer und einen Behälter aufweisen, über den die Späne der Werkzeugmaschine entfernt und in dem Behälter zwischengelagert werden.

Aus der DE 203 19 063 U1 ist auch eine Vorrichtung zum Abstützten von Drehgestellen an mobilen Radsatzbearbeitungsmaschinen bekannt. Danach ist in der Längsrichtung in einem Abstand von den Bearbeitungswerkzeugen der mobilen Radsatzbearbeitungsmaschine, welcher einem Achsabstand des Drehgestells entspricht, eine Stütze für die Räder eines Radsatzes des Drehgestells vorgesehen. Die Stütze für den jeweiligen nicht in Bearbeitung befindlichen Radsatz des Drehgestells befindet sich in einer vertikalen Höhe, welche durch die Oberkante des Service-Containers vorgegeben ist. Ein längs dieser Stütze verfahrbarer Rollenbock nimmt den Radsatz auf und kann in der horizontalen Richtung auf den jeweiligen Achsabstand des Drehgestells eingestellt werden.

Aus der DE 20 2005 004 786 U1 ist schließlich auch eine Maschine zum Reprofilieren der Räder und/oder Bremsscheiben von Radsätzen von Eisenbahnfahrzeugen bekannt. Bei der bekannten Einrichtung ist unterflur des Werkstattgleises eine Grube eingelassen. Auf dem Grunde der Grube ist ein zweites Gleis vorgesehen, auf welches die mobile Radsatzbearbeitungsmaschine abgesenkt werden kann und auf dem sie beweg- und arretierbar ist. Auch hier kann die mobile Radssatzbearbeitungsmaschine mit einem Service-Container gekuppelt sein, der seinerseits auf Rädern ruht, die in Richtung des zweiten Gleises in der Verlängerung der Grube verschiebbar sind. Zum Ausgleich von eventuellen Höhenunterschieden zwischen der mobilen Radsatzbearbeitungsmaschine und dem Service-Container sind Stützen vorgesehen, welche zur Bearbeitung eines Radsatzes vorher unter die mobile Radsatzdrehmaschine geschoben werden und diese dabei vom Werkstattgleis abheben.

Den bekannten Einrichtungen ist insgesamt gemeinsam, dass die mobile Radsatzbearbeitungsmaschine und der zugehörige Service-Container jeweils voneinander trennbar sind und bei Bedarf aneinander angekuppelt werden können. Dabei hat sich herausgestellt, dass das Entsorgen der anfallenden Späne schwierig ist. Für das Entsorgen der über einen längeren Bearbeitungszeitraum anfallenden Späne hat sich der mobile Service-Container als unbefriedigend erwiesen, weil er schnell an die Grenzen seiner Aufnahmefähigkeit gelangte. Auch war der Höhenausgleich in der Horizontalen zwischen dem in Bearbeitung befindlichen Radsatz und dem abzustützenden Radsatz eines losen Drehgestells nicht immer befriedigend, so dass hier eine verbesserte Lösung angestrebt werden musste.

Daraus ergibt sich die Aufgabe für die vorliegende Erfindung, an einer mobilen Radsatzbearbeitungsmaschine und dem mit ihr kuppelbaren mobilen Service-Container eine Einrichtung vorzusehen, welche über einen längeren Betriebszeitraum eine einwandfreie Entsorgung der anfallenden Späne gewährleistet. Zugleich sollte eine verbesserte Abstützung des jeweils nicht in Bearbeitung befindlichen Radsatzes eines Drehgestells herbeigeführt werden.

Als Lösung der Aufgabe wurde gefunden, dass die mobile Radsatzdrehmaschine, der mobile Service-Container und die Einrichtung zum Abstützen auf einem gemeinsamen Tragrahmen angeordnet sind, der auf Rollen gelagert ist, die im Werkstattgleis verfahrbar sind. Weitere vorteilhafte Ausgestaltungen der Erfindung ergeben sich aus den Unteransprüchen 2 bis 10.

Nachfolgend wird die Erfindung an einem Ausführungsbeispiel näher beschrieben.

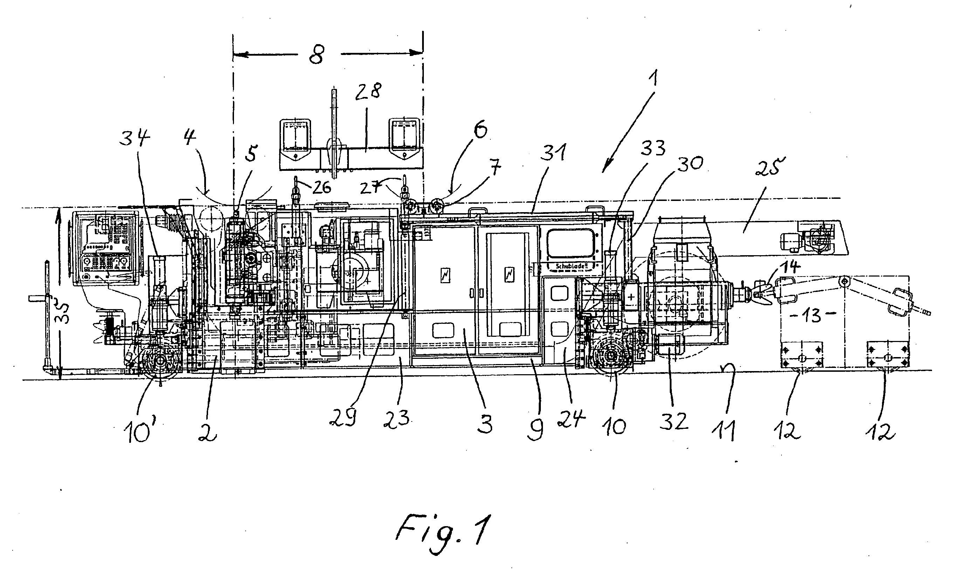

Es zeigen jeweils in verkleinertem Maßstab die
- Fig. 1 eine Radsatzbearbeitungseinrichtung in der Seitenansicht, die
- Fig. 2 die Radsatzbearbeitungseinrichtung der Fig. 1 in der Draufsicht und die
- Fig. 3 die Radsatzbearbeitungseinrichtung in der Vorderansicht in gegenüber den Darstellungen der vorhergehenden Figuren etwas vergrößertem Maßstab.

Die mobile Radsatzbearbeitungseinrichtung 1 besteht aus einer Radsatzbearbeitungsmaschine 2 und einem zugehörigen Service-Container 3. Die Radsatzbearbeitungsmaschine 2 ist dazu vorgesehen, einen Radsatz 4 eines Drehgestells (nicht gezeigt) zu bearbeiten. Dabei kann sowohl das Umrissprofil der beiden Radscheiben des Radsatzes 4 bearbeitet werden als auch an dem Radsatz 4 eventuell vorhandene Bremsscheiben (nicht gezeigt). Während der Bearbeitung des Radsatzes 4 auf der Radsatzbearbeitungsmaschine 2 mithilfe von Werkzeugen 5 wird der andere Radsatz 6 des Drehgestells von einer Einrichtung 7 abgestützt, die auf der Oberseite des Service-Containers 3 in horizontaler Richtung verschiebbar ist. Durch die horizontale Verschiebbarkeit der Abstützeinrichtung 7 kann die Abstützung des jeweils nicht in Bearbeitung befindlichen Radsatzes 6 des Drehgestells dessen jeweiligem Achsabstand 8 angepasst werden.

Die Radsatzbearbeitungsmaschine 2 und ihr zugehöriger Service-Container 3 sind auf einem gemeinsamen Tragrahmen 9 angeordnet, welcher auf Rollen 10 und 10' gelagert ist. Die Rollen 10 und 10' sind längs eines Werkstattgleises 11 verfahrbar. Ebenso auf Rollen 12 abgestützt ist ein Spänebehälter 13, welcher über eine Kupplung 14 mit dem stirnseitigen Ende der Radsatzbearbeitungseinrichtung 1 verbunden werden kann.

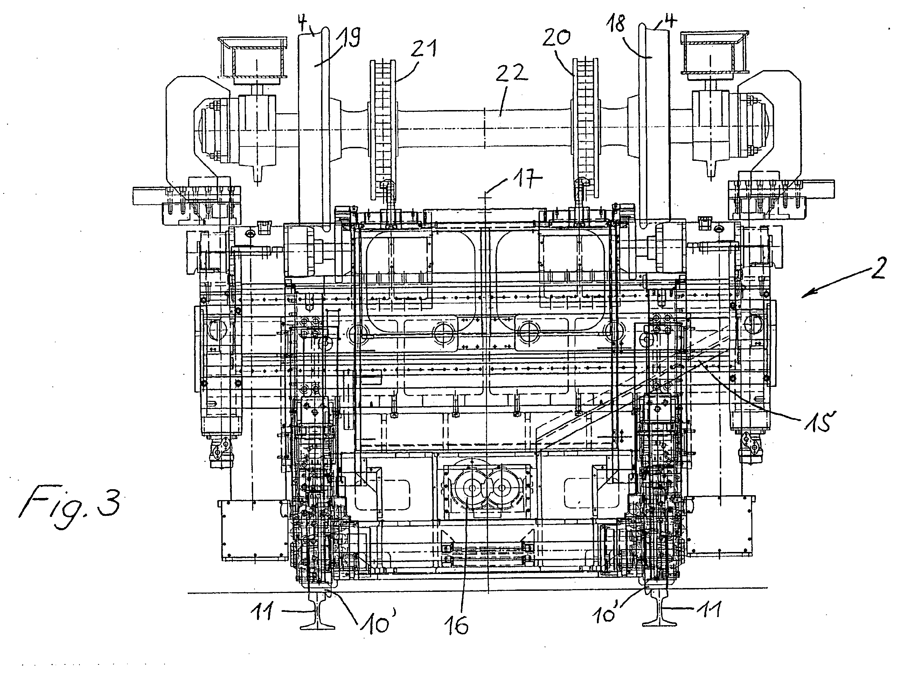

Die am Bearbeitungswerkzeug 5 anfallenden Späne rutschen zunächst über ein Schrägblech 15 in einen Spanbrecher 16. In der Fig. 3 ist nur eines von zwei Schrägblechen 15 dargestellt. Der Spanbrecher 16 befindet sich im unteren Bereich der Radsatzbearbeitungsmaschine 2 in der Längsmitte 17 der Radsatzbearbeitungseinrichtung 1. Im vorliegenden Fall weist der Radsatz 4 neben seinen beiden Radscheiben 18 und 19 auch.Bremsscheiben 20 und 21 auf, welche auf der Achswelle 22 des Radsatzes 4 befestigt sind.

In der Verlängerung des Spanbrechers 16 verläuft ein Späneförderer 23 im unteren Bereich durch den Service-Container 3 hindurch. Der horizontale Späneförderer 23 mündet in einen Senkrechtförderer 24, welcher seinerseits in einen horizontalen Abschnitt 25 oberhalb des Spänebehälters 13 übergeht. Demnach laufen die angefallenen und zerkleinerten Späne nachdem sie den Spanbrecher 16 verlassen haben, unter dem Service-Container 3 durch, werden vom Senkrechtförderer 24 auf eine Höhe annähernd in Höhe der Oberseite des Service-Containers 3 angehoben und an den horizontalen Abschnitt 25 der Förderstrecke übergeben. Vom Ende des horizontalen Abschnitts 25 fallen die zerkleinerten Späne in den Spänebehälter 13, von wo aus sie nach Bedarf entsorgt werden.

Sowohl an der Radsatzbearbeitungsmaschine 2 als auch an dem Service-Container 3 sind im Bereich ihrer aufeinander zuweisenenden Stirnseiten Anschlagmittel 26 und 27 vorgesehen. Die Anschlagmittel 26, 27 sind ihrerseits in Bezug auf die gesamte Radsatzbearbeitungseinrichtung 1 derart angebracht, dass die Radsatzbearbeitungseinrichtung 1 in annähernd horizontaler Lage von einem Kran 28 angehoben werden kann. Das Anheben der Radsatzbearbeitungseinrichtung 1 wird beispielsweise erforderlich, wenn die Radsatzbearbeitungseinrichtung 1 von einem Werkstattgleis 11 auf ein anderes Werkstattgleis (nicht gezeigt) umgesetzt werden muss.

Ansonsten dient der Kran 28 in erster Linie dazu, ein loses Drehgestell, in welchem die beiden Radsätze 4 und 6 drehbar gelagert sind anzuheben und umzuwenden, sobald der Radsatz 4 fertig bearbeitet ist und der Radsatz 6 zur Bearbeitung gelangen soll. Während der Radsatz 6 bearbeitet wird, wird der bereits fertig bearbeitete Radsatz 4 von der Abstützeinrichtung 7 getragen.

Vorhandene Unterschiede in der horizontalen Lage der beiden Radsätze 4 und 6, welche bereits vorhanden sind oder sich während der Bearbeitung einstellen, können über Stützen 29 und 30 ausgeglichen werden, welche eine Fahrbahn 31 für die Abstützeinrichtung 7 tragen.

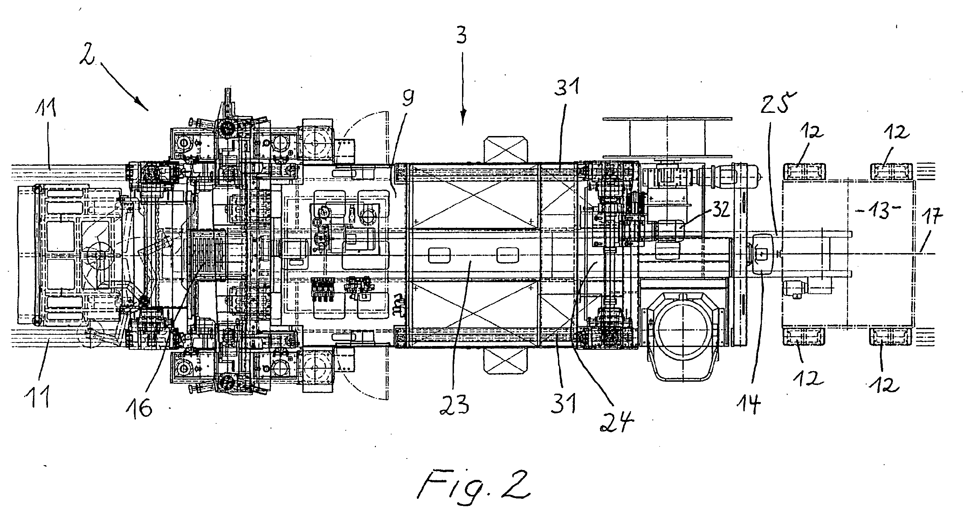

Wie aus der Fig. 2 deutlich ersichtlich, sind der Spanbrecher 16, der Späneförderer 23, der Senkrechtförderer 24 und der horizontale Abschnitt 25 der Förderstrecke für die Späne längs der Längsmitte 17 der Radsatzbearbeitungseinrichtung 1 angeordnet.

Ein Fahrantrieb 32 für die mobile Radsatzbearbeitungseinrichtung 1 befindet sich am Service-Container 3 und wirkt auf die dortige Rolle 10. Mittels des Fahrantriebs 32 kann die mobile Radsatzbearbeitungseinrichtung 1 längs des Werkstattgleises 11 verfahren werden. Dabei rollen die der Radsatzbearbeitungsmaschine 2 zugeordneten Rolle 10' lose mit. Hubzylinder 33 und 34 sind oberhalb der Rollen 10 und 10' zusätzlich vorgesehen. Mithilfe der Hubzylinder 33 und 34 ist es möglich, die vertikale Arbeitshöhe 35 der mobilen Radsatzbearbeitungseinrichtung 1 nach Bedarf zu verändern. Eine solche Änderung wird beispielsweise erforderlich, wenn die mobile Radsatzbearbeitungseinrichtung 1 unterhalb eines eingebauten Drehgestells eines aufgeständerten Eisenbahnzuges bewegt werden soll, um die dortigen Radsätze zu bearbeiten. Über die Hubzylinder 33 und 34 können sodann den jeweiligen Erfordernissen der Betriebswerkstatt angepasste unterschiedliche Arbeitshöhen 35 eingestellt werden.

### Bezugszeichenliste

- 1: Radsatzbearbeitungseinrichtung
- 2: Radsatzbearbeitungsmaschine
- 3: Service-Container
- 4: Radsatz
- 5: Bearbeitungswerkzeug
- 6: Radsatz
- 7: Abstützeinrichtung
- 8: Achsabstand
- 9: Tragrahmen
- 10: und 10' Rollen
- 11: Werkstattgleis
- 12: Rollen
- 13: Spänebehälter
- 14: Kupplung
- 15: Schrägblech
- 16: Spanbrecher
- 17: Längsmitte
- 18: Radscheibe
- 19: Radscheibe
- 20: Bremsscheibe
- 21: Bremsscheibe
- 22: Achswelle
- 23: Späneförderer
- 24: Senkrechtförderer
- 25: horizontaler Abschnitt
- 26: Anschlagmittel
- 27: Anschlagmittel
- 28: Kran
- 29: Stütze
- 30: Stütze
- 31: Fahrbahn
- 32: Fahrantrieb
- 33: Hubzylinder
- 34: Hubzylinder
- 35: Arbeitshöhe

## Patentansprüche

1. Mobile Radsatzbearbeitungseinrichtung zum Bearbeiten von Radsätzen (4), die in einem Drehgestell drehbar gelagert sind, umfassend einen auf Rollen (10,10') gelagerten und auf einem Werkstattgleis (11) verfahrbaren Service-Container (3), eine mobile, mit dem Service-Container (3) verbindbare Radsatzdrehmaschine (2), sowie eine Einrichtung (7) am Service-Container (3) zum Abstützen von einem jeweils nicht in Bearbeitung befindlichen Radsatz (6) des Drehgestells,
**dadurch gekennzeichnet, dass** die mobile Radsatzdrehmaschine (2), der Service-Container (3) und die Einrichtung (7, 31) zum Abstützen eines Radsatzes (4, 6) auf einem gemeinsamen Tragrahmen (9) angeordnet sind, der auf Rollen (10, 10') gelagert ist, die im Werkstattgleis (11) verfahrbar sind.

2. Mobile Radsatzbearbeitungseinrichtung nach Anspruch 1, **dadurch gekennzeichnet, dass** im Gestell der Radsatzdrehmaschine (2) Spanleitebleche (15) und ein Spanbrecher (16) angeordnet sind.

3. Mobile Radsatzbearbeitungseinrichtung nach Anspruch 2, **dadurch gekennzeichnet, dass** im Gestell des Service-Containers (3) ein Späneförderer (23) vorgesehen ist, der mit dem Spanbrecher (16) in Verbindung steht.

4. Mobile Radsatzbearbeitungseinrichtung nach den Ansprüchen 2 und 3, **dadurch gekennzeichnet, dass** der Spanbrecher (16) und der Späneförderer (23) im unteren Bereich der Radsatzdrehmaschine (2) sowie des Service-Containers (3) vorgesehen sind.

5. Mobile Radsatzbearbeitungseinrichtung nach einem der Ansprüche 1 bis 4, **dadurch gekennzeichnet, dass** ein Spänebehälter (13) vorgesehen ist, der ebenfalls auf Rollen (12) gelagert und auf dem Werkstattgleis (11) verfahrbar sowie über eine Kupplung (14) an das stirnseitige Ende des Service-Containers (3) anschließbar ist.

6. Mobile Radsatzbearbeitungseinrichtung nach einem der Ansprüche 1 bis 5, **dadurch gekennzeichnet, dass** im Bereich des stirnseitigen Endes des Service-Containers (3) ein Senkrechtförderer (24) für die vom Späneförderer (23) geförderten Späne vorgesehen ist.

7. Mobile Radsatzbearbeitungseinrichtung nach Anspruch 6, **dadurch gekennzeichnet, dass** der Senkrechtförderer (24) in einem waagerechten Abschnitt (25) oberhalb der Oberkante des Spänebehälters (13) endet.

8. Mobile Radsatzbearbeitungseinrichtung nach einem der Ansprüche 1 bis 7, **dadurch gekennzeichnet, dass** am stirnseitigen Ende der Radsatzdrehmaschine (3) ebenso wie am stirnseitigen Ende des Service-Containers (3), die einander jeweils zugewandt sind, Anschlagmittel (26, 27) vorgesehen sind zum Anheben der mobilen Radsatzbearbeitungseinrichtung (1) mit einem Kran (28).

9. Mobile Radsatzbearbeitungseinrichtung nach einem der Ansprüche 4 bis 7, **dadurch gekennzeichnet, dass** der Spanbrecher (16), der Späneförderer (23), der Senkrechtförderer (24) und der waagerechte Abschnitt (25) des Späneförderers (23) längs der Längsmitte (17) der mobilen Radsatzdrehmaschine (2) und des Service-Containers (3) angeordnet sind.

10. Mobile Radsatzbearbeitungseinrichtung nach Anspruch 1, **dadurch gekennzeichnet, dass** die Einrichtung (7, 31) zum Abstützen gegenüber dem gemeinsamen Tragrahmen (9) in der vertikalen Höhe (35) einstellbar ist.

## Claims

1. Mobile wheelset reprofiling device for machining wheelsets (4) which are mounted in a bogie such that they can rotate, including a service container (3) mounted on rollers (10, 10') and movable on a workshop rail (11), a mobile wheelset lathe (2) that can be connected to the service container (3), and a device (7) on the service container (3) to support a wheelset (6) of the bogie that is not currently being machined,
**characterised by** the fact that
the mobile wheelset lathe (2), the service container (3) and the device (7, 31) to support a wheelset (4, 6) are arranged on a common support frame (9), which is mounted on rollers (10, 10'), which can be moved in the workshop rail (11).

2. The mobile wheelset reprofiling device in accordance with Claim 1
is **characterised by** the chip guidance plates (15) and a chip crusher (16) which are installed in the frame of the wheelset lathe (2).

3. The mobile wheelset reprofiling device in accordance with Claim 2
is **characterised by** a chip conveyor (23) which is connected to the chip crusher (16) in the frame of the service container (3).

4. The mobile wheelset reprofiling device in accordance with claims 2 and 3 is **characterised by** the chip crusher (16) and the chip conveyor (23) which are located in the lower area of the wheelset lathe (2) and the service container (3).

5. Mobile wheelset reprofiling device in accordance with one of the claims 1 to 4, **characterised**
**by** the inclusion of a chip container (13), which is also mounted on rollers (12) and can be moved along the workshop track (11) and connected via coupling (14) to the end of the service container (3).

6. Mobile wheelset reprofiling device in accordance with one of claims 1 to 5, **characterised**
**by** the inclusion of a vertical conveyor (24) at the end of the service container for the chips carried by the chip conveyor (23).

7. Mobile wheelset reprofiling device in accordance with claim 6,
**characterised by** the fact that the vertical conveyor (24) ends in a horizontal section (25) above the upper edge of the chip container (13).

8. Mobile wheelset reprofiling device in accordance with one of the claims 1 to 7, **characterised**
**by** the provision of lifting gear (26, 27) at the end of the wheelset lathe (3) and the end of the service container (3) which face each other to allow the mobile wheelset reprofiling device (1) to be lifted by a crane (28).

9. Mobile wheelset reprofiling device in accordance with one of the claims 4 to 7, **characterised**
**by** the mounting of the chip crusher (16), the chip conveyor (23), the vertical conveyor (24) and the horizontal section (25) of the chip conveyor (23) along the longitudinal centre (17) of the mobile wheelset lathe (2) and the service container (3).

10. The mobile wheelset reprofiling device in accordance with Claim
1 is **characterised by**
the ability to adjust the vertical height (35) of the device (7, 31) for supporting compared with the common support frame (9).

## Revendications

1. Dispositif d'usinage d'essieux montés mobile destiné à l'usinage d'essieux montés (4) logés de manière rotative dans un bogie, comprenant un container de service (3) logé sur des galets (10,10') et déplaçable sur une voie de réparations (11), un tour mobile à essieux montés (2) pouvant être couplé avec le container de service (3), ainsi qu'un dispositif (7) situé au niveau du container de service (3) destiné à soutenir l'essieu monté (6) respectif du bogie qui n'est pas en cours d'usinage,
**caractérisé en ce que**
le tour mobile à essieux montés (2), le container de service (3) et le dispositif (7, 31) destiné à soutenir un essieu monté (4, 6) sont disposés sur un cadre portant (9), lui-même logé sur des galets (10, 10') qui sont déplaçables dans la voie de réparations (11).

2. Le dispositif mobile d'usinage d'essieux montés conforme à la revendication 1,
est **caractérisé en ce que** des tôles de guidage des copeaux (15) et un broyeur de copeaux (16) sont disposés dans le bâti du tour à essieux montés (2).

3. Dispositif mobile d'usinage d'essieux montés conforme à la revendication 2,
**caractérisé en ce qu'**un convoyeur de copeaux (23) relié au broyeur de copeaux (16) est prévu dans le bâti du container de service (3).

4. Dispositif mobile d'usinage d'essieux montés conforme aux revendications 2 et 3, **caractérisé en ce que** le broyeur de copeaux (16) et le convoyeur de copeaux (23) sont prévus dans la zone inférieure du tour à essieux montés (2) et du container de service (3).

5. Dispositif mobile d'usinage d'essieux montés conforme à l'une des revendications 1 à 4, **caractérisé en ce qu'**un réservoir à copeaux (13) est prévu, qui est également logé sur des galets (12) et déplaçable sur une voie de réparations (11) et qui est raccordable via un accouplement (14) à l'extrémité frontale du container de service (3).

6. Dispositif mobile d'usinage d'essieux montés conforme à l'une des revendications 1 à 5, **caractérisé en ce que** dans la zone de l'extrémité frontale du container de service (3) un convoyeur vertical est prévu (24) pour les copeaux transportés par le convoyeur de copeaux (23).

7. Dispositif mobile d'usinage d'essieux montés conforme à la revendication 6,
**caractérisé en ce que** le convoyeur vertical (24) se termine par une section horizontale (25) au-dessus du bord supérieur du réservoir à copeaux (13).

8. Dispositif mobile d'usinage d'essieux montés conforme à l'une des revendications 1 à 7, **caractérisé en ce que** des dispositifs d'accrochage (26, 27) sont prévus au niveau de l'extrémité frontale du tour à essieux montés (3) et à l'extrémité frontale du container de service (3), respectivement tournées l'une vers l'autre, dont la fonction est de permettre de soulever le dispositif mobile d'usinage d'essieux montés (1) à l'aide d'une grue (28).

9. Dispositif mobile d'usinage d'essieux montés conforme à l'une des revendications 4 à 7, **caractérisé en ce que** le broyeur de copeaux (16), le convoyeur de copeaux (23), le convoyeur vertical (24) et la section horizontale (25) du convoyeur de copeaux (23) sont disposés le long du centre longitudinal (17) du tour mobile à essieux montés (2) et du container de service (3).

10. Dispositif mobile d'usinage d'essieux montés conforme à la revendication
1, **caractérisé en ce que** la hauteur verticale (35) du dispositif (7, 31) de soutien placé vis à vis
du cadre portant commun (9) est réglable.
